# EUROPÄISCHE PATENTSCHRIFT

(11) **EP 1 961 679 B1**
(45) Veröffentlichungstag und Bekanntmachung des Hinweises auf die Patenterteilung: **16.09.2009**
(21) Anmeldenummer: 07102740.3
(22) Anmeldetag: 20.02.2007
(51) Int. Cl.: B65G 1/08, B65G 47/252

(54) **Verfahren zum Einlagern eines langgestreckten Stückguts in einen geneigten Lagerschacht eines automatisierten Stückgutlagers**
Method for storing elongated goods in a tilted storage shaft of an automated storage facility
Procédé destiné au stockage d'une marchandise en zone allongée dans un puits de stockage adapté d'un entrepôt de marchandise automatisé

(43) Veröffentlichungstag der Anmeldung: 27.08.2008
(73) Patentinhaber: Rowa Automatisierungssysteme GmbH, 53539 Kelberg (DE)
(72) Erfinder: Klapperich, Andreas, 56745 Rieden (DE)
(74) Vertreter: Schmidt, Frank-Michael

(56) Entgegenhaltungen:
- EP-A1- 0 390 152
- DE-A1- 19 635 396
- US-A- 3 339 702

## Beschreibung

Die Erfindung betrifft ein Verfahren zum Einlagern eines Stückguts in einen geneigten Lagerschacht eines automatisierten Stückgutlagers.

Aus der Patentschrift DE 196 35 396 C2 sowie der (noch unveröffentlichten) Patentanmeldung EP 05019718.1 sind automatisiertes Stückgutlager mit geneigten Lagerschächten (ein sogenanntes Schachtsystem) bekannt, die zur Lagerung von Arzneimittelpackungen dienen. Arzneimittelpackungen weisen überwiegend eine quaderförmige Gestalt auf. Seit langem ist es bekannt, eine Mehrzahl gleichartiger quaderförmiger Packungen in einem langgestreckten Lagerschacht hintereinander zu lagern, wobei der Lagerschacht an seinem oberen Ende befüllt wird und auszulagernde Arzneimittelpackungen an seinem unteren Ende entnommen werden. Es ist auch bekannt, sowohl die Einlagerung in den geneigten Lagerschacht als auch die Auslagerung zu automatisieren. Zur automatischen Auslagerung kann beispielsweise an dem unteren Ende eines Lagerschachts ein elektromechanischer Auslösemechanismus vorgesehen sein, der in Abhängigkeit von Steuersignalen einer zentralen Steuereinrichtung (beispielsweise eines Computers) das untere Lagerschachtende derart freigibt, daß eine oder mehrere der einliegenden Arzneimittelpackungen austreten und beispielsweise auf ein Förderband fallen und zu einem Ausgabeplatz transportiert werden. Ein Lagerschacht kann an seinem oberen Ende mit Hilfe eines rechnergestützten Bediengeräts befüllt werden. Das Bediengerät kann beispielsweise einen Pufferschacht enthalten, in dem sich eine oder mehrere einzulagernde Arzneimittelpackungen befinden. Der Pufferschacht des Bediengeräts weist beispielsweise die gleiche Neigung wie der Lagerschacht auf. Ein unteres Ende des Pufferschachts des Bediengeräts wird an das obere Ende des Lagerschachts, in den die Packungen einzulagern sind, herangefahren. Dann wird eine Sperre am unteren Ende des Pufferschachts freigegeben und die in dem Pufferschacht einliegenden Arzneimittelpackungen rutschen in den Lagerschacht. Bei einer anderen Ausführungsform weist das Bediengerät einen Backengreifer auf, der die Arzneimittelpackungen an einander gegenüberliegenden Seitenflächen greift. Zusätzlich weist das Bediengerät einen Tisch auf, auf dem die von dem Backengreifer ergriffene Arzneimittelpackung aufliegt. Ein derartiges Backengreifer-Bediengerät wird beispielsweise an das oberen Ende des geneigten Lagerschachts herangefahren, wobei sich ein dem Lagerschacht zugewandter Rand des Auflagetisches in der Nähe des oberen Rands des Bodens des Lagerschachts befindet. Dann wird die Arzneimittelpackung mit Hilfe des Backengreifers zumindest soweit in Richtung des Lagerschachts geschoben, bis sich die senkrechte Projektion des Schwerpunkts jenseits des Randes des Auflagetischs über dem Lagerschacht befindet. Beim anschließenden Freigeben des Greifers kippt die Arzneimittelpackung in den Lagerschacht und rutscht auf ihrer Auflagefläche (oder eines Teils der Auflagefläche) auf dem Boden den Lagerschacht hinab.

Neben den einen Backengreifer aufweisenden Bediengeräten gibt es auch solche, die einen Sauggreifer aufweisen. Wenn ein quaderförmiges Stückgut (beispielsweise eine Arzneimittelpakkung) auf den Lagertisch des Bediengeräts gezogen werden soll, so wird der Sauggreifer an eine Stirnseite des auf einem Lagertisch oder einem Regalboden aufliegenden Stückguts herangeführt. Anschließend wird ein Unterdruck erzeugt, wobei das quaderförmige Stückgut angesaugt wird. Dann wird der Sauggreifer zurückgefahren, wobei das quaderförmige Stückgut auf den Auflagetisch des Bediengeräts gezogen wird. Um das auf dem Auflagetisch des Bediengeräts aufliegende Stückgut anschließend in einen geneigten Lagerschacht einzulagern, wird wiederum der Auflagetisch des Bediengeräts an das obere Ende des Lagerschachts herangefahren. Anschließend wird der Sauggreifer in Richtung auf den Lagerschacht ausgefahren, wobei es nicht erforderlich ist, daß gleichzeitig ein Unterdruck erzeugt wird. Der Sauggreifer dient hier lediglich als Schieber, der gegen die Stirnseite des quaderförmigen Stückguts drückt. Wenn dann der Schwerpunkt (bzw. die senkrechte Projektion des Schwerpunkts) des Stückguts über den Rand des Auflagetischs des Bediengeräts hinwegbewegt wird, kippt das Stückgut in den Lagerschacht hinein und rutscht in diesen hinab. Wie auch bei dem Backengreifer ist hierbei die Neigung des Lagerschachts so gewählt, daß ein definiertes Nach-Vorn-Kippen und Hinabrutschen des Stückguts auch bei variierender Größe gewährleistet ist.

Bei den bekannten Anordnungen ergibt es sich, daß das Stückgut jeweils auf derjenigen Auflagefläche auf dem Boden des Lagerschachts aufliegt, auf der es auch auf dem Auflagetisch des Bediengeräts auflag. Langgestreckte quaderförmige Stückgüter, das heißt Stückgüter, deren Längsabmessung eine maximale Querabmessung übersteigt, werden üblicherweise auf der größeren der beiden sich in Längsrichtung erstreckenden Seitenflächen in dem Schacht gelagert und deshalb auch auf diesen Seitenflächen von dem Bediengerät transportiert. Handelt es sich jedoch bei den langgestreckten Stückgütern um Flaschen, so sollten diese üblicherweise auf ihrer Standfläche gelagert werden, die allerdings nicht diejenige Fläche mit der größten Abmessung darstellt. Flaschen stellen Stückgüter mit einer Standfläche dar, die in der Ebene der Standfläche oder einer dazu parallelen Ebene eine maximale Querabmessung aufweisen, die regelmäßig geringer ist als die Längsabmessung (Höhe) in einer zur Standfläche senkrechten Längsrichtung. Es ist grundsätzlich möglich, derartige Flaschen mit Hilfe eines Bediengeräts (beispielsweise Backengreifers) derart zu transportieren, daß sie auf der (kleineren) Standfläche stehen. Jedoch ergeben sich Probleme, wenn derartige langgestreckte Stückgüter in der oben beschriebenen Weise in einen geneigten Lagerschacht eingeschoben werden sollen. Es ergibt sich hier die Gefahr des Umkippens und des undefinierten Hineinrutschens in den Lagerschacht.

US-A-3,339,702 beschreibt ein Stückgut das gekippt wird.

Aufgabe der Erfindung ist es daher, eine Lagerung langgestreckter Stückgüter, die auf einer Standfläche transportiert werden, in einen geneigten Lagerschacht derart zu ermöglichen, daß diese in dem geneigten Lagerschacht eine definierte Lage einnehmen.

Diese Aufgabe wird erfindungsgemäß durch ein Verfahren mit den Merkmalen des Anspruchs 1 gelöst. Die Erfindung geht von dem Grundgedanken aus, daß die langgestreckten Stückgüter zwar auf ihrer Standfläche von dem Bediengerät transportiert werden, jedoch in dem geneigten Lagerschacht derart einliegen sollen, daß ihre Standfläche nach unten gerichtet und quer zum Boden des Lagerschachts orientiert ist. Bei dem erfindungsgemäßen Verfahren zum Einlagern eines Stückguts in einen geneigten Lagerschacht eines automatisierten Stückgutlagers (wobei das Stückgut eine Standfläche aufweist und in der Ebene der Standfläche oder einer dazu parallelen Ebene eine maximale Querabmessung und in einer zur Standfläche senkrechten Längsrichtung eine die maximale Querabmessung übersteigende Längsabmessung hat) wird das Stückgut auf seiner Standfläche stehend bereitgestellt und von einem Greifmechanismus in dieser Lage erfaßt und auf das obere Ende eines geneigten Lagerschachts zubewegt. Dabei greift der Greifmechanismus an einem Ort in der unteren Hälfte des Stückguts an. Das Stückgut wird vor oder bei Erreichen des oberen Endes des geneigten Lagerschachts gedreht oder gekippt, indem eine gegen die Bewegungsrichtung gerichtete Kraft auf das Stückgut oberhalb des Orts, an dem der Greifmechanismus angreift, einwirkt, wobei das Stückgut bei einer anschließenden Freigabe des Greifmechanismus derart in den geneigten Lagerschacht rutscht, daß seine Standfläche nach unten gerichtet und quer zum Boden des Lagerschachts orientiert ist. Der in der unteren Hälfte einwirkende Greifmechanismus kann sowohl ein Backengreifer als auch ein Schieber, beispielsweise der Saugkopf eines Sauggreifers, sein. Die gegen die Bewegungsrichtung gerichtete, seitlich auf das Stückgut einwirkende Kraft könnte beispielsweise durch einen zweiten Backengreifer, der oberhalb eines ersten Backengreifers auf das Stückgut einwirkt, erzeugt werden. Bei einer bevorzugten, besonders einfachen Ausführungsform wird die seitlich auf das Stückgut einwirkende Kraft von einem Anschlag aufgebracht, der oberhalb des Orts, an dem der Greifmechanismus an das Stückgut angreift, auf das Stückgut einwirkt. Bei dem Anschlag kann es sich beispielsweise um den Boden eines über dem geneigten Lagerschacht angeordneten weiteren geneigten Lagerschachts handeln. Wird als Greifmechanismus beispielsweise ein einfacher Schieber (zum Beispiel der Saugkopf eines Sauggreifers) verwendet, so sind der Rand des Auflagetischs des Bediengeräts, der vertikale Abstand des Saugkopfs von der Auflagefläche des Auflagetischs und die vertikale und horizontale Position des Anschlags so aufeinander abgestimmt, daß das Stückgut an einer Stelle zu kippen beginnt, an der sich die Standfläche bereits im wesentlichen auf dem Boden des geneigten Lagerschachts befindet. Die optimalen Positionen des Saugkopfs, der Standfläche und des Anschlags lassen sich mit Hilfe weniger Versuche in Abhängigkeit von dem Dimensionen der einzulagernden langgestreckten Stückgüter ermitteln.

Bei einer Ausführungsform ist ein höhenverstellbarer Anschlag vorgesehen, dessen Position in Abhängigkeit von der Längsabmessung des Stückguts eingestellt wird.

Vorteilhafte und/oder bevorzugte Weiterbildungen der Erfindung sind in den Unteransprüchen gekennzeichnet.

Im Folgenden wird die Erfindung anhand von in den Zeichnungen dargestellten bevorzugten Ausführungsbeispielen näher beschrieben. In den Zeichnungen zeigen:
Figur 1A eine schematische Seitenansicht einer zur Ausführung des erfindungsgemäßen Verfahrens geeigneten Anordnung mit einem einen Sauggreifer aufweisenden Bediengerät, einem geneigten Lagerschacht und einem Anschlag;
Figur 1B eine schematische Draufsicht auf die Anordnung gemäß Figur 1A;
Figur 1C eine Perspektivansicht der in den Figuren 1A und 1B gezeigten Anordnung;
Figur 2A eine schematische Seitenansicht einer alternativen Anordnung zur Ausführung des erfindungsgemäßen Verfahrens mit einem Backengreifer und einem geneigten Lagerschacht;
Figur 2B eine schematische Draufsicht auf die Anordnung gemäß Figur 2A; und
Figur 2C eine schematische Perspektivansicht der in den Figuren 2A und 2B gezeigten Anordnung.

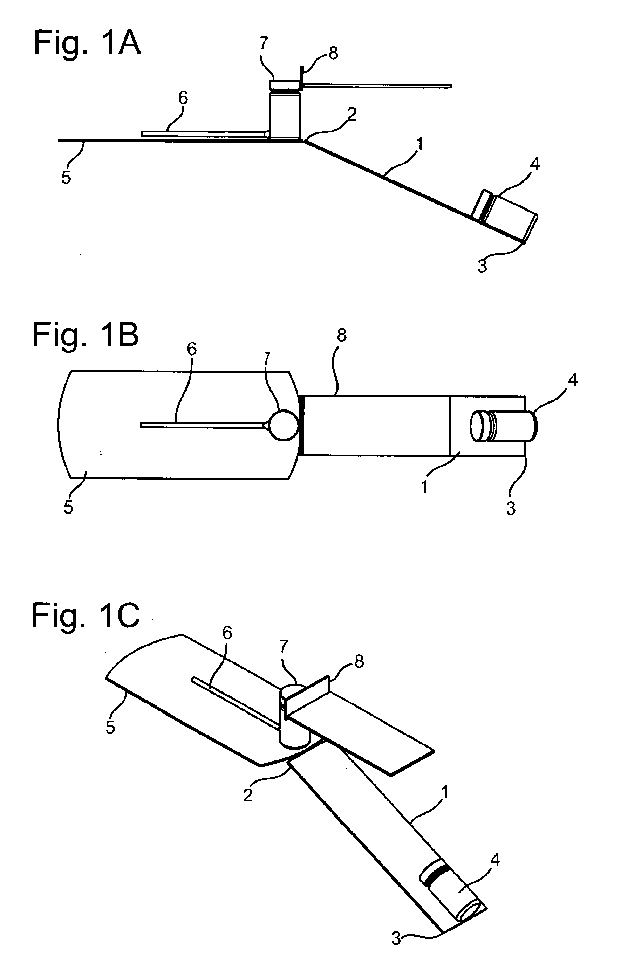

Figur 1A zeigt eine schematische Seitenansicht einer Anordnung, die Teil eines automatisierten Stückgutlagers ist. Die in Figur 1A gezeigte Anordnung umfaßt einen geneigten Lagerschacht 1, wobei in der Figur nur der Boden des geneigten Lagerschachts dargestellt ist. Der geneigte Lagerschacht 1 weist ein oberes Ende 2 und ein unteres Ende 3 auf. An dem unteren Ende 3 des Lagerschachts 1 befindet sich eine Sperre, die ein Weiterrutschen eines in dem Lagerschacht 1 einliegenden Stückguts verhindert. Die Sperre an dem unteren Ende 3 ist mit Hilfe einer Steuereinrichtung derart auslösbar, daß ein oder mehrere Stückgüter aus dem Lagerschacht 1 austreten. In Figur 1A ist schematisch ein langgestrecktes zylindrisches Stückgut 4, beispielsweise ein Tablettenröhrchen oder eine Flasche, am unteren Ende 3 des Lagerschachts 1 liegend dargestellt.

An dem oberen Ende 2 des Lagerschachts 1 ist ein Bediengerät positioniert, wobei in Figur 1A ein Auflagetisch 5 und ein Sauggreifer 6 des Bediengeräts schematisch dargestellt sind. An dem dem Lagerschacht 1 zugewandten vorderen Rand des Auflagetischs 5 befindet sich ein in den Lagerschacht 1 einzulagerndes weiteres Stückgut 7 von ebenfalls zylindrischer, langgestreckter Form. Das Stückgut 7 steht auf seiner Standfläche, die bei dem gezeigten Beispiel eine Kreisfläche bildet. Dies ist in der Draufsicht gemäß Figur 1B zu erkennen. Der langgestreckte Sauggreifer, an dessen dem Stückgut 7 zugewandten Ende sich ein Saugkopf befindet, ist in Figur 1A in einem geringen vertikalen Abstand über dem Auflagetisch und parallel zu diesem angeordnet. Er greift somit in einer geringen Höhe an dem Stückgut 7 an.

Der Sauggreifer 6 dient bei dem Einlagern des Stückguts 7 in den Lagerschacht 1 zum Schieben des Stückguts 7, wobei die Unterdruckerzeugung des Saugkopfes ausgeschaltet sein kann. Während des Transports des Stückguts 7 mit Hilfe des (nicht dargestellten) Bediengeräts, d.h. während des Verfahrens des Auflagetischs 5 des Bediengeräts von einer Lagerposition zu einer anderen, befindet sich das Stückgut 7 üblicherweise in einer zentralen Position auf dem Auflagetisch 5. Dort wird es beispielsweise von dem Sauggreifer 6 festgehalten, wobei zusätzlich seitliche Greif- oder Führungsbacken zum Sichern des Stückguts 7 während des Verfahrens des Auflagetischs 5 des Bediengeräts vorgesehen sein können. Wenn der Auflagetisch 5 vor dem oberen Ende 2 desjenigen Lagerschachts 1 positioniert worden ist, in den das Stückgut 7 eingelagert werden soll, so werden die ggf. auf dem Auflagetisch angeordneten seitlichen Greif- oder Führungsbacken soweit auseinandergefahren, daß ein Verschieben des Stückguts 7 auf dem Auflagetisch möglich ist. Dann wird das Stückgut 7 mit Hilfe des Sauggreifers 6, bei dem die Unterdruckerzeugung ausgeschaltet sein kann, bis zu dem vorderen, d.h. dem Lagerschacht 1 zugewandten Rand des Auflagetischs geschoben. Diese Position ist in den Figuren 1A bis 1C dargestellt.

Bei Erreichen dieser am vorderen Ende des Auflagetischs befindlichen Position stößt das Stückgut 7 oberhalb seines Schwerpunkts an einen Anschlag 8 an, welcher eine gegen die Bewegungsrichtung des Stückguts 7 wirkende Kraft auf das Stückgut ausübt. Wenn nunmehr der als Schieber wirkende Sauggreifer 6 weiter in Richtung des Lagerschachts 1 bewegt wird, so stellt sich zunächst das Stückgut 7 quer (d.h. es kippt), wobei seine Standfläche weiter in Richtung des Lagerschachts 1 verschoben wird. Bei geeigneter Positionierung des Anschlags 8 gegenüber dem oberen Ende 2 des Lagerschachts 3 kippt das Stückgut 7 unter gleichzeitigem Eintritt in den Lagerschacht, so daß es mit seiner Standfläche nach unten in dem Lagerschacht 1 hinabrutscht.

Auf diese Weise ist es möglich, zylindrische langgestreckte Stückgüter, beispielsweise Flaschen, mit Hilfe eines einen Sauggreifer und einen Auflagetisch aufweisenden Bediengeräts in geneigte Lagerschächte in einer vorgegebenen Orientierung einzulagern.

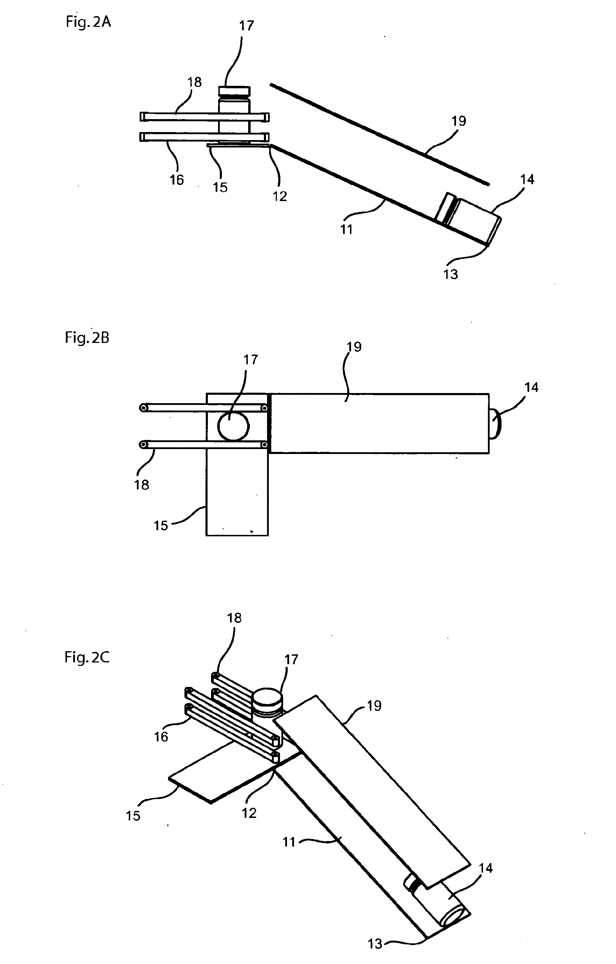

Figuren 2A bis 2C zeigen eine alternative Anordnung zur Ausführung des erfindungsgemäßen Verfahrens zum Einlagern eines Stückguts in einen geneigten Lagerschacht eines automatisierten Stückgutlagers. Wiederum ist ein geneigter Lagerschacht 11 dargestellt, wobei lediglich der Boden des Lagerschachts 11 skizziert ist. Der Lagerschacht 11 weist ein oberes Ende 12 sowie ein unteres Ende 13 auf. Figur 2 zeigt wiederum ein am unteren Ende 13 einliegendes Stückgut 14, welches von einem an dem unteren Ende 13 angeordneten Anschlag oder einer auslösbaren Sperre gehalten wird, wobei diese Sperre zur Auslagerung des Stückguts 14 aus dem Lagerschacht 11 freigegeben werden kann. An das obere Ende 12 des Bodens des Lagerschachts 11 grenzt ein Auflagetisch 15 an. Der Auflagetisch 15 erstreckt sich, wie in Figur 2B und 2C zu sehen ist, quer zum Lagerschacht 11. Üblicherweise sind benachbart zu dem Lagerschacht 11 weitere geneigte Lagerschächte angeordnet, so daß sich der Auflagetisch 15 entlang der oberen Enden der Lagerschächte erstreckt. Bei dem in Figur 2 gezeigten Ausführungsbeispiel ist der Auflagetisch kein Bestandteil des Bediengeräts, sondern fest vor den oberen Enden der Lagerschächte 11 angeordnet. Das Bediengerät umfaßt einen Backengreifer 16, der in einem geringen vertikalen Abstand über dem Auflagetisch 15 ein auf seiner Standfläche auf dem Auflagetisch 15 aufliegendes einzulagerndes Stückgut 17 seitlich ergreift. Der Backengreifer ist mit einer (in Figur 2 nicht dargestellten) Steuereinrichtung derart verbunden, daß er sowohl in einer Richtung quer zu den oberen Ende der Lagerschächte als auch in Richtung auf die Lagerschächte zubewegt werden kann. Die einzulagernden Stückgüter 17 werden zunächst entlang des Auflagetischs 15 bis vor das obere Ende 12 des ausgewählten Lagerschachts 11, in das das Stückgut 17 eingelagert werden soll, verschoben. Anschließend werden die ergriffenen Stückgüter auf den Lagerschacht 11 zu bewegt.

Bei der in Figur 2 dargestellten Ausführungsform ist anstelle eines Anschlags ein zweiter Backengreifer 18 vorgesehen, der oberhalb des ersten Backengreifers 16 das auf der Standfläche stehende Stückgut 17 greifen kann. Durch eine Relativbewegung des oberen Backengreifers 18 zum unteren Backengreifer 16 kann eine Schrägstellung bzw. ein Kippen des Stückguts 17 erreicht werden. Um das Stückgut 17 in den Lagerschacht 11 einzulagern, wird zunächst das Stückgut 17 auf dem Auflagetisch 15 vor das obere Ende des Lagerschachts 11 positioniert. Dann werden sowohl der untere als der obere Backengreifer 16 und 18 parallel und synchron zueinander auf den Lagerschacht 11 zu bewegt, bis der dem Lagerschacht zugewandte vordere Rand des Auflagetischs 15 erreicht ist. Anschließend wird der untere Backengreifer 16 stärker in Richtung des Lagerschachts 11 bewegt als der obere Backengreifer 18, so daß es zu einer Schrägstellung des Stückguts 16 kommt, wobei diese fortgesetzt wird, bis sich die Standfläche oberhalb des Bodens des Lagerschachts befindet. Bei anschließender Freigabe der Backengreifer 16 und 18 rutscht das Stückgut in den Lagerschacht 11 hinab.

Es sind eine Vielzahl weiterer Alternativen und Kombinationen der anhand der Figuren 1 und 2 beschriebenen Anordnungsmerkmale denkbar. Beispielsweise kann bei der Ausführungsform gemäß Figur 2 anstelle des oberen Backengreifers wiederum ein Anschlag Verwendung finden, wie er in Figur 1 gezeigt ist. Bei der Ausführungsform mit dem Sauggreifer gemäß Figur 1 kann anstelle des Anschlags oder zusätzlich zu diesem ein Backengreifer verwendet werden, der oberhalb des Sauggreiferkopfs an dem Stückgut angreift. Als Anschlag kann auch der Boden eines weiteren, oberhalb des Lagerschachts 11 angeordneten Lagerschachts 19 verwendet werden.

Mit Hilfe in den Figuren 1 und 2 skizzierten und den erwähnten alternativen Anordnungen können langgestreckte Stückgüter unter gleichzeitigem Kippen derart in geneigte Lagerschächte eingelagert werden, daß sie eine definierte Position einnehmen, bei der die Standfläche nach unten gerichtet und quer zum Boden des Lagerschachts orientiert ist. Diese Stückgüter können beispielsweise Flaschen für Arzneimittel, Tablettenröhrchen und langgestreckte, zylindrische oder quaderförmige Packungen sein.

## Patentansprüche

1. Verfahren zum Einlagern eines Stückguts (7, 17) in einen geneigten Lagerschacht (1, 11) eines automatisierten Stückgutlagers, wobei das Stückgut eine Standfläche aufweist,
wobei das Stückgut in der Ebene der Standfläche oder einer dazu parallelen Ebene eine maximale Querabmessung und in einer zur Standfläche senkrechten Längsrichtung eine die maximale Querabmessung übersteigende Längsabmessung hat,
wobei das Stückgut auf seiner Standfläche stehend bereitgestellt und von einem Greifmechanismus (6, 16) in dieser Lage erfaßt und auf das obere Ende (2, 12) eines geneigten Lagerschachts (1, 11) zu bewegt wird, wobei der Greifmechanismus an einem Ort in der unteren Hälfte des Stückguts angreift,
wobei das Stückgut vor oder bei Erreichen des oberen Endes (2, 12) des geneigten Lagerschachts gedreht oder gekippt wird, indem eine gegen die Bewegungsrichtung gerichtete Kraft auf das Stückgut oberhalb des Orts, an dem der Greifmechanismus angreift, einwirkt, wobei das Stückgut bei einer anschließenden Freigabe des Greifmechanismus derart in den geneigten Lagerschacht rutscht, daß seine Standfläche nach unten gerichtet und quer zum Boden des Lagerschachts orientiert ist.

2. Verfahren nach Anspruch 1, **dadurch gekennzeichnet, daß** das Stückgut gekippt wird, indem es gegen einen Anschlag (8) geschoben wird, der oberhalb des Orts, an dem der Greifmechanismus an das Stückgut angreift, auf das Stückgut einwirkt.

3. Verfahren nach Anspruch 2, **dadurch gekennzeichnet, daß** der Anschlag höhenverstellbar ist und seine Position in Abhängigkeit von der Längsabmessung des Stückguts eingestellt wird.

4. Verfahren nach einem der Ansprüche 1 - 3, **dadurch gekennzeichnet, daß** das Stückgut auf das obere Ende des Lagerschachts zu bewegt wird, indem es auf seiner Standfläche auf einem an das obere Ende (2, 12) des Lagerschachts angrenzenden Auflagetisch (5, 15) verschoben wird.

5. Verfahren nach einem der Ansprüche 1 - 4, **dadurch gekennzeichnet, daß** das Stückgut von einem Backengreifer (16) erfaßt und bewegt wird.

6. Verfahren nach einem der Ansprüche 1 - 4, **dadurch gekennzeichnet, daß** das Stückgut von einem Sauggreifer (6) erfaßt und bewegt wird.

## Claims

1. A method of storing an article (7, 17) in an inclined storage shaft (1, 11) of an automated article store, wherein the article has a support surface, wherein the article has a maximum transverse dimension in the plane of the support surface or a plane parallel thereto and has a longitudinal dimension in a longitudinal direction perpendicular to the support surface which exceeds the maximum transverse dimension, wherein the article is provided standing on its support surface and is gripped by a gripping mechanism (6, 16) in this position and moved to the upper end (2, 12) of an inclined storage shaft (1, 11), whereby the gripping mechanism engages at a location in the lower half of the article, wherein before or on reaching the upper end (2, 12) of the inclined storage shaft, the article is rotated or tilted by the action of a force directed opposite to the direction of movement on the article above the location, at which the gripping mechanism engages, wherein, when the gripping mechanism subsequently releases, the article slides into the inclined storage shaft such that its support surface is directed downwardly and is orientated transversely to the base of the storage shaft.

2. A method as claimed in Claim 1, **characterised in that** the article is tilted by pushing it against an abutment (8), which acts on the article above the location at which the gripping mechanism engages the article.

3. A method as claimed in Claim 2, **characterised in that** the abutment is vertically adjustable and its position is adjusted in dependence on the longitudinal dimension of the article.

4. A method as claimed in one of Claims 1 - 3, **characterised in that** the article is moved to the upper end of the storage shaft by being pushed on its support surface on a support table (5, 15) adjoining the upper end (2, 12) of the storage shaft.

5. A method as claimed in one of Claims 1 - 4, **characterised in that** the article is gripped and moved by a jaw gripper (16).

6. A method as claimed in one of Claims 1 - 4, **characterised in that** the article is gripped and moved by a suction gripper (6).

## Revendications

1. Procédé de stockage d'un article (7, 17) dans un puits de stockage incliné (1, 11) d'un magasin d'articles automatisé, dans lequel l'article présente une surface d'appui, lequel article a une dimension transversale maximale dans le plan de la surface d'appui ou d'un plan parallèle à celui-ci et une dimension longitudinale dépassant la dimension transversale maximale dans une direction longitudinale perpendiculaire à la surface d'appui,
lequel article est préparé en position verticale sur sa surface d'appui, saisi par un mécanisme de préhension (6, 16) dans cette position et déplacé jusqu'à l'extrémité supérieure (2, 12) d'un puits de stockage incliné (1, 11), le mécanisme de préhension s'engageant sur un point de la moitié inférieure de l'article,
lequel article est soumis à une rotation ou à un basculement avant d'atteindre l'extrémité supérieure (2, 12) du puits de stockage incliné ou en l'atteignant en appliquant une force dirigée à l'encontre du sens de déplacement sur l'article au-dessus du point où s'engage le mécanisme de préhension, lequel article glisse, lors d'une libération suivante du mécanisme de préhension, dans le puits de stockage incliné de sorte que sa surface d'appui soit dirigée vers le bas et soit orientée transversalement au fond du puits de stockage.

2. Procédé selon la revendication 1, **caractérisé en ce que** l'article est soumis à un basculement en le poussant contre une butée (8), qui agit sur l'article au-dessus du point, où s'engage le mécanisme de préhension sur l'article.

3. Procédé selon la revendication 2, **caractérisé en ce que** la butée est réglable en hauteur et sa position est réglée en fonction de la dimension longitudinale de l'article.

4. Procédé selon l'une quelconque des revendications 1 à 3, **caractérisé en ce que** l'article est déplacé vers l'extrémité supérieure du puits de stockage en le déplaçant sur sa surface d'appui sur une table d'application (5, 15) adjacente à l'extrémité supérieure (2, 12) du puits de stockage.

5. Procédé selon l'une quelconque des revendications 1 à 4, **caractérisé en ce que** l'article est saisi et déplacé par une pince de robot (16).

6. Procédé selon l'une quelconque des revendications 1 à 4, **caractérisé en ce que** l'article est saisi et déplacé par une pince aspirante (6).
